(19) Europäisches Patentamt
European Patent Office
Office européen des brevets

(11) **EP 3 617 355 B1**

(12) **EUROPÄISCHE PATENTSCHRIFT**

(45) Veröffentlichungstag und Bekanntmachung des Hinweises auf die Patenterteilung:
**10.03.2021   Patentblatt 2021/10**

(51) Int Cl.:
*D02G 3/48* (2006.01)        *B60C 9/00* (2006.01)

(21) Anmeldenummer: **19172876.5**

(22) Anmeldetag: **07.05.2019**

(54) **VERSTÄRKUNGSCORD FÜR ELASTOMERE ERZEUGNISSE, INSBESONDERE FÜR FAHRZEUGLUFTREIFEN, UND ELASTOMERES ERZEUGNIS**

REINFORCEMENT CORD FOR ELASTOMERIC PRODUCTS, IN PARTICULAR FOR VEHICLE TYRES AND ELASTOMERIC PRODUCT

CORDON DE RENFORCEMENT POUR PRODUITS ÉLASTOMÈRES, EN PARTICULIER POUR PNEUMATIQUES DE VÉHICULE ET PRODUITS ÉLASTOMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2018   DE 102018209522**

(43) Veröffentlichungstag der Anmeldung:
**04.03.2020   Patentblatt 2020/10**

(73) Patentinhaber: **Continental Reifen Deutschland GmbH**
**30165 Hannover (DE)**

(72) Erfinder:
• **Recker, Carla**
**30165 Hannover (DE)**

• **Kramer, Thomas**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
WO-A2-2010/085712          CH-A- 545 860
GB-A- 1 165 853            US-A- 3 655 630
US-A1- 2011 111 154

**Beschreibung**

**Beschreibung**

Die Erfindung betrifft einen Verstärkungscord für elastomere Erzeugnisse, insbesondere für Fahrzeugluftreifen, enthaltend zumindest ein Garn aus Filamenten.

Ferner betrifft die Erfindung ein elastomeres Erzeugnis, das zumindest einen Verstärkungscord enthält.

Eine Vielzahl elastomerer Erzeugnisse, wie Schläuche, Förderbänder, Antriebsriemen und Fahrzeugluftreifen, sind Verstärkungscorden zur Verstärkung versehen. Verstärkungscorde bestehen aus einem oder mehreren miteinander verdrehten Garnen und sind dem Fachmann in Aufbau und Material in unterschiedlichsten Ausführungen bekannt. Dabei kann es sich bei zwei oder mehr Garnen um das gleiche Material handeln oder, wie im Fall der Hybridcorde, um wenigstens zwei verschiedene Garne. Die Garne sind in der Regel aus vielen einzelnen Filamenten (Fasern) aufgebaut. Die Verstärkungscorde werden z. B. in Form von Geweben, Gelegen oder Gewirken in den elastomeren Erzeugnissen eingesetzt und bei der Herstellung der elastomeren Erzeugnisse üblicherweise in eine Kautschukmischung eingebettet.

Bisher werden in elastomeren Erzeugnissen, insbesondere in Karkasslagen, Wulstverstärkern, Gürteln oder Gürtelbandagen von Fahrzeugluftreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt. Andererseits ist es bekannt, nichterdölbasierte textile Festigkeitsträger aus Viskose, wie beispielsweise Rayon oder Lyocell einzusetzen.

Nachteilig an vielen Naturfasern, also an nicht-erdölbasierten Materialien als Material für Verstärkungscorde ist, dass diese keine endlose Faserstruktur und eine stark schwankende Faserqualität aufweisen.

Zudem erschwert z. B. das fehlende Schrumpfverhalten von Rayon den Einsatz beispielsweise als Gürtelbandage von Fahrzeugluftreifen. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen, zu entwickeln und einzusetzen, ohne Einbußen in der Haltbarkeit der daraus hergestellten Produkte hinnehmen zu müssen. So sind aus der DE 102010017107 A1 Hybridcorde für z.B. Karkasslagen und/oder Gürtelbandagen bekannt, die wenigstens aus einem Garn aus recyceltem PET bestehen. Aus der EP 2 590 811 A1 sind Multifilamentgarne mit Polyamid 10.10-Fasern bekannt, wobei die beiden Ausgangsmonomere 1,10-Decamethylendiamin und 1,10-Decandiasäure aus Ricinusöl als nachwachsendem Rohstoff gewonnen werden. Diese Multifilamentgarne können in Fahrzeugluftreifen als Festigkeitsträger eingesetzt werden.

<A> Der vorliegenden Erfindung liegt nun die Aufgabe zu Grunde, einen Verstärkungscord für elastomere Erzeugnisse, insbesondere für Fahrzeugluftreifen, enthaltend zumindest ein Garn bereitzustellen, der eine Alternative zu herkömmlichen Verstärkungscorden darstellt, umweltfreundliche und ressourcenschonende Materialien enthält und gleichzeitig nachhaltig produziert werden kann. Zudem soll der Verstärkungscord eine gleichbleibende Produktqualität aufweisen.

Die Aufgabe wird dadurch gelöst, dass : zumindest die 1,12-Dodecandisäure aus nachwachsenden Rohstoffen hergestellt ist, wobei alle Filamente zumindest eines Garnes aus PA PACM 12 bestehen, wobei der Verstärkungscord zumindest ein weiteres Garn aus Filamenten enthält, wobei die Garne miteinander endverdreht sind, und wobei das zumindest eine weitere Garn aus Filamenten aus Polyester, einem anderen Polyamidtyp als PA PACM 12, Aramid, Polyketon, oder vorzugsweise aus Chemiefasern aus natürlichen Polymeren oder Naturfasern besteht.

PA PACM 12 ist ein Polyamid aus den Ausgangsstoffen 1,12-Dodecandisäure und Bis(4-Aminocyclohexyl)methan (cycloaliphatisches Diamin). Die 1,12-Dodecandisäure kann z. B. aus der aus den nachwachsenden Rohstoffen Kokosöl, Lorbeeröl oder Palmöl zur Verfügung stehenden Dodecansäure durch $\omega$-Oxidation mit Hilfe genetisch modifizierter Hefestämme hergestellt werden. Sie kann auch aus Ricinolsäure aus den Samen des Wunderbaumes über mehrere chemische Reaktionsstufen (Hydroformylierung und Oxidation) gewonnen werden. Auf diesen Wegen kann PA PACM 12 erzeugt werden, dass zu mehr als 50 % auf nachwachsenden Rohstoffen basiert. Dieses Polyamid ist biobasiert und damit umweltfreundlich und ressourcenschonend. Es kann unter dem Namen Trogamid® von der der Firma Evonik auf dem Markt erhalten werden.

PA PACM 12 weist aufgrund seiner geringen Dichte an Amidbindungen eine geringe Feuchtigkeitsaufnahme auf, ist dimensionsstabil und besitzt eine gute mechanische und chemische Beständigkeit. Seine Schmelztemperatur liegt bei ca. 240 °C. Es lässt sich leicht verarbeiten.

Innerhalb der Garne eines Verstärkungscordes können Filamante aus unterschiedlichen Materialien vorhanden sein. Gemäß der Erfindung bestehen aber alle Filamente zumindest eines Garnes aus PA PACM 12. Derartige Garne lassen sich einfach spinnen und zum Garn verdrehen.

Der Verstärkungscord enthält zumindest ein weiteres Garn aus Filamenten, wobei die Garne miteinander endverdreht sind. Es sind z. B. Cordkonstruktionen möglich, bei denen zwei (x2-Konstruktion) oder drei (x3-Konstruktion) Garne zu einem Verstärkungscord endverdreht sind.

Das oder die weiteren Garne bestehen aus Filamenten unterschiedlichen Materials. Sind innerhalb des Verstärkungscordes Garne aus unterschiedlichem Material vorhanden, handelt es sich um einen sogenannten Hybridcord.

Bei dem Material für das weitere Garn kann es sich vorzugsweise um nichtmetallisches Material, wie beispielsweise um Polyester, aliphatische und aromatische Polyamide, Aramid, Polyetherketon, Polyketon, Polyethylennaphthalat, Viskose, Naturfasern oder Glasfasern, handeln. Durch geeignete Materialauswahl kann der Verstärkungscord gezielt in seinen Eigenschaften eingestellt werden.

Gemäß der Erfindung besteht das zumindest eine weitere Garn des Verstärkungscordes aus Filamenten aus Polyester, einem anderen Polyamidtyp als PA PACM 12, Aramid, Polyketon, oder vorzugsweise aus Chemiefasern aus natürlichen Polymeren oder Naturfasern. Bei Chemiefasern aus natürlichen Polymeren oder Naturfasern bietet sich der Vorteil, dass der gesamte Verstärkungscord auf Materialien basiert, die umweltfreundlich und ressourcenschonend sind und beispielsweise nicht auf Rohöl basieren.

Um ein höheres Schrumpfverhalten des Verstärkungscordes zu erhalten, ist es gemäß einer weiteren vorteilhaften Weiterbildung der Erfindung bevorzugt, wenn er aus wenigstens einem Garn aus PA PACM 12 und wenigstens einem weiteren Garn aus einem anderen Polyamid (PA) besteht. Dieses ist insbesondere für die Verwendung dieses Hybridcordes in der Gürtelbandage eines PKW-Reifens von Vorteil.

Besonders bevorzugt besteht das weitere Garn aus PA 6.6- und/oder PA 6-Filamenten und/oder PA 10.10-Filamenten und/oder PA 10.12-Filamenten und/oder PA 11-Filamenten. Ganz besonders bevorzugt besteht das Garn aus PA 6.6-Filamenten.

Um einen höheren Modul des Verstärkungscordes zu erhalten, besteht er aus wenigstens einem Garn aus PA PACM 12 und wenigstens einem weiteren Garn aus Aramid. Dieses ist insbesondere für die Verwendung dieses Hybridcordes in der Gürtelbandage von UHP-(Ultra High Performance-) Reifen von Vorteil.

Um einen stabilen Verstärkungscord weitgehend ohne Schrumpf zu erhalten, besteht er aus wenigstens einem Garn aus PA PACM 12 und wenigstens einem weiteren Garn aus Rayon. Dieses ist insbesondere für die Verwendung dieses Hybridcordes in der Karkasse von PKW-Reifen und für das Hochgeschwindigkeits-Verhalten von PKW-Reifen von Vorteil.

Bei dem Verstärkungscord weisen die Garne vorzugsweise eine Feinheit von 200 bis 5000 dtex auf. Die Garne sind dabei vorzugweise mit einer Verdrehung von 100 bis 600 t/m, bevorzugt 100 bis 550 t/m, besonders bevorzugt 200 bis 550 t/m, verdreht. Derartige Verstärkungscorde lassen sich einfach herstellen und können z. B. als Festigkeitsträger in Fahrzeugluftreifen eingesetzt werden.

Die Garne sind bevorzugt mit einer Verdrehung von 100 bis 600 t/m, bevorzugt 100 bis 550 t/m, besonders bevorzugt 200 bis 550 t/m, endverdreht. Besonders bevorzugt ist es, wenn die Erstverdrehung des Garnes und die Endverdrehung des Cordes in ihrer Verdrehungszahl ungefähr übereinstimmen, wobei vorzugsweise die Drehrichtungen von Garnen und Cord entgegengesetzt sind.

Um eine ausreichende Ermüdungsbeständigkeit der Verstärkungscorde zu erhalten, ist es von Vorteil, wenn der Twistfaktor $\alpha$ eines jeden Garnes oder des Verstärkungscordes zwischen 100 bis 300, vorzugsweise zwischen 150 und 250, liegt, wobei sich der Twistfaktor $\alpha$ nach folgender Formel berechnet: $\alpha$=Twist [t/m] x (Feinheit [tex]/1000)$^{1/2}$.

Um eine zuverlässige Haftung von textilen Festigkeitsträgern zum Gummi zu gewährleisten, ist es zweckmäßig, den erfindungsgemäßen Verstärkungscord mit einer Haftimprägnierung, z.B. mit einem RFL-Dip im 1- oder 2-Bad-Verfahren, zu versehen.

Der erfindungsgemäße Verstärkungscord kann in unterschiedlichsten elastomeren Erzeugnissen, wie Riemen, Fördergurten, Schläuchen oder Luftfedern, eingesetzt werden.

Bei dem erfindungsgemäßen elastomeren Erzeugnis handelt es sich vorzugsweise um einen Fahrzeugluftreifen. Fahrzeugluftreifen sind Massenprodukte, bei denen der Austausch herkömmlicher Verstärkungscorde gegen biobasierte Verstärkungscorde, zu einem besonders großen Effekt hinsichtlich der Ressourcenschonung führt.

Bevorzugt enthält der Fahrzeugluftreifen den Verstärkungscord in der Karkasslage und/oder in wenigstens einer Gürtellage und/oder als Wulstverstärker und/oder in der Gürtelbandage. Besonders bevorzugt enthält der Fahrzeugluftreifen den Verstärkungscord in der Karkasslage und/oder in der Gürtelbandage.

**Patentansprüche**

1. Verstärkungscord für elastomere Erzeugnisse, insbesondere für Fahrzeugluftreifen, enthaltend zumindest ein Garn aus Filamenten, wobei zumindest ein Garn des Verstärkungscordes Filamente aus PA PACM 12 enthält, wobei PA PACM 12 ein Polyamid aus den Ausgangsstoffen 1,12-Dodecandisäure und Bis(4-Aminocyclohexyl)methan ist, **dadurch gekennzeichnet, dass** zumindest die 1,12-Dodecandisäure aus nachwachsenden Rohstoffen hergestellt ist,
wobei alle Filamente zumindest eines Garnes aus PA PACM 12 bestehen,

wobei der Verstärkungscord zumindest ein weiteres Garn aus Filamenten enthält, wobei die Garne miteinander endverdreht sind, und

wobei das zumindest eine weitere Garn aus Filamenten aus Polyester, einem anderen Polyamidtyp als PA PACM 12, Aramid, Polyketon, oder vorzugsweise aus Chemiefasern aus natürlichen Polymeren oder Naturfasern besteht.

2. Verstärkungscord nach Anspruch 1, **dadurch gekennzeichnet, dass** das Garn bzw. die Garne eine Feinheit von 200 und 5000 dtex aufweist bzw. aufweisen.

3. Verstärkungscord nach Anspruch 1 oder 2, **dadurch gekennzeichnet, dass** der Twistfaktor $\alpha$ eines jeden Garnes oder des Verstärkungscordes zwischen 100 bis 300, vorzugsweise zwischen 150 und 250, liegt, wobei sich der Twistfaktor $\alpha$ nach folgender Formel berechnet: $\alpha$=Twist [t/m] x (Feinheit [tex]/1000)$^{1/2}$.

4. Elastomeres Erzeugnis, **dadurch gekennzeichnet, dass** es zumindest einen Verstärkungscord nach einem der Ansprüche 1 bis 3 enthält.

5. Elastomers Erzeugnis nach Anspruch 4, **dadurch gekennzeichnet, dass** es sich um einen Riemen, einen Fördergurt, einen Schlauch oder eine Luftfeder handelt.

6. Elastomers Erzeugnis nach Anspruch 4, **dadurch gekennzeichnet, dass** es sich um einen Fahrzeugluftreifen handelt.

7. Elastomeres Erzeugnis nach Anspruch 6, **dadurch gekennzeichnet, dass** der Fahrzeugluftreifen zumindest einen Verstärkungscord nach einem der Ansprüche 1 bis 3 in der Karkasslage und/oder in wenigstens einer Gürtellage und/oder als Wulstverstärker und/oder in der Gürtelbandage enthält.

**Claims**

1. Reinforcement cord for elastomeric products, in particular for pneumatic tyres, comprising at least one yarn made of filaments, where at least one yarn of the reinforcement cord comprises filaments made of PA PACM 12, where PA PACM 12 is a polyamide made of the starting materials 1,12-dodecanedioic acid and bis(4-aminocyclohexyl)methane, **characterized in that** at least the 1,12-dodecanedioic acid has been produced from renewable feedstocks, where all filaments consist at least of one yarn made of PA PACM 12, where the reinforcement cord comprises at least one further yarn made of filaments, where the yarns have been end-twisted together, and where the at least one further yarn made of filaments consists of polyester, of a polyamide type other than PA PACM 12, of aramid, of polyketone, or preferably of synthetic fibres made of natural polymers or natural fibres.

2. Reinforcement cord according to Claim 1, **characterized in that** the linear density of the yarn(s) is 200 and 5000 dtex.

3. Reinforcement cord according to Claim 1 or 2, **characterized in that** the twist factor $\alpha$ of any one yarn or of the reinforcement cord is between 100 to 300, preferably between 150 and 250, where the twist factor $\alpha$ is calculated according to the following formula:

$$\alpha = \text{twist } [t/m] \times (\text{linear density } [tex]/1000)^{1/2}.$$

4. Elastomeric product, **characterized in that** it comprises at least one reinforcement cord according to any of Claims 1 to 3.

5. Elastomeric product according to Claim 4, **characterized in that** it is a drive belt, a conveyor belt, a hose or an air spring.

6. Elastomeric product according to Claim 4, **characterized in that** it is a pneumatic tyre.

7. Elastomeric product according to Claim 6, **characterized in that** the pneumatic tyre comprises at least one reinforcement cord according to any of Claims 1 to 3 in the carcass ply and/or in at least one bracing ply and/or as bead reinforcer and/or in the belt bandage.

**Revendications**

1.  Cordon de renforcement pour produits élastomères, notamment pour pneus de véhicule, contenant au moins un fil composé de filaments, au moins un fil du cordon de renforcement contenant des filaments composés de PA PACM 12, le PA PACM 12 étant un polyamide issu des matières de départ acide 1,12-dodécanedioïque et bis(4-aminocyclohexyl)méthane, **caractérisé en ce qu'au** moins l'acide 1,12-dodécanedioïque est fabriqué à partir de matières premières renouvelables,
    tous les filaments d'au moins un fil étant constitués par du PA PACM 12,
    le cordon de renforcement contenant au moins un fil supplémentaire composé de filaments,
    les fils étant vrillés aux extrémités les uns avec les autres, et
    l'au moins un fil supplémentaire composé de filaments étant constitué par du polyester, un autre type de polyamide que le PA PACM 12, de l'aramide, de la polycétone, ou de préférence par des fibres synthétiques composées de polymères naturels ou des fibres naturelles.

2.  Cordon de renforcement selon la revendication 1, **caractérisé en ce que** le fil ou les fils présentent un titre de 200 et 5 000 dtex.

3.  Cordon de renforcement selon la revendication 1 ou 2, **caractérisé en ce que** le facteur de torsion $\alpha$ de chaque fil ou du cordon de renforcement se situe entre 100 à 300, de préférence entre 150 et 250, le facteur de torsion $\alpha$ étant calculé par la formule suivante : $\alpha$ = torsion [t/m] x (titre [tex]/1000)$^{1/2}$.

4.  Produit élastomère, **caractérisé en ce qu'**il contient au moins un cordon de renforcement selon l'une quelconque des revendications 1 à 3.

5.  Produit élastomère selon la revendication 4, **caractérisé en ce qu'**il s'agit d'une courroie, d'une bande de transport, d'un tuyau ou d'un ressort pneumatique.

6.  Produit élastomère selon la revendication 4, **caractérisé en ce qu'**il s'agit d'un pneu de véhicule.

7.  Produit élastomère selon la revendication 6, **caractérisé en ce que** le pneu de véhicule contient au moins un cordon de renforcement selon l'une quelconque des revendications 1 à 3 dans la couche de carcasse et/ou dans au moins une couche de ceinture et/ou en tant que renfort de talon et/ou dans le bandage de ceinture.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010017107 A1
- EP 2590811 A1